# EUROPEAN PATENT APPLICATION

(11) **EP 4 460 021 A1**
(43) Date of publication of application: **06.11.2024**
(21) Application number: 23848945.4
(22) Date of filing: 27.04.2023
(51) Int. Cl.: H04N 23/60

(54) **AUTOMATIC PHOTOGRAPHING METHOD AND ELECTRONIC DEVICE**

(30) Priority: 05.08.2022 CN 202210939182
(71) Applicant: Honor Device Co., Ltd., Shenzhen, Guangdong 518040 (CN)
(72) Inventor: ZHANG, Jian, Shenzhen, Guangdong 518040 (CN); XU, Jirun, Shenzhen, Guangdong 518040 (CN)
(74) Representative: Gill Jennings & Every LLP
(86) International application number: PCT/CN2023/091098
(87) International publication number: WO 2024/027234

(57) **Abstract**

Embodiments of this application provide an automatic photographing method and an electronic device. The method includes: A hardware abstraction layer may collect an image frame sequence from image data obtained by a camera sensor, and detect a semantic meaning and picture quality of each image frame in the image frame sequence; the hardware abstraction layer buffers the image frame if it is detected that the semantic meaning and the picture quality of the image frame meet a preset buffer condition; and if it is detected that the semantic meaning and the picture quality of the image frame meet a preset photographing triggering condition, the hardware abstraction layer invokes a preset photographing algorithm to process to-be-photographed data to generate a photographing result. An entire process does not need to be actively triggered by a user. The hardware abstraction layer may detect each frame of image in real time after a camera application is started, and automatically buffers the image or automatically triggers photographing when the image meets a preset condition. This is not only relatively convenient for photographing, but also can obtain a photographing result with relatively high quality, thereby greatly improving photographing experience of the user.

## Description

This application claims priority to Chinese Patent Application No. 202210939182.3, filed with the China National Intellectual Property Administration on August 5, 2022 and entitled "AUTOMATIC PHOTOGRAPHING METHOD AND ELECTRONIC DEVICE", which is incorporated herein by reference in its entirety.

### TECHNICAL FIELD

This application relates to the field of terminal device technologies, and in particular, to an automatic photographing method and an electronic device.

### BACKGROUND

A camera application is one of most frequently used applications in an electronic device. After starting the camera application in response to an operation performed by a user on the camera application, the electronic device (for example, an electronic device with an Android system) enters a photographing preview mode. The user may preview an imaging effect of a to-be-photographed area through a photographing preview interface, and tap a photographing button after determining the imaging effect. In response to the operation performed by the user on the photographing button, the electronic device controls an internal photographing module to photograph the to-be-photographed area, and stores a finally generated image in an album.

When the to-be-photographed area is in a dynamically changing scenario, for example, in a high-speed movement scenario, the foregoing conventional photographing method may cause the following case: When the user presses the photographing button, the electronic device cannot focus a focus point on a photographed subject, and consequently, a captured image is of poor picture quality and cannot be used.

As the electronic device is increasingly developing towards an intelligent direction, a snapshot function is added to the electronic device based on a conventional photographing function. After the snapshot function is enabled, the electronic device continuously performs, in the photographing preview mode, focus tracking on the photographed subject in the to-be-photographed area, so that when the user presses the photographing button, it can be ensured that the focus point closely follows the photographed subject, and therefore an image with better picture quality is captured. However, this photographing method mainly depends on active triggering of the user and is inconvenient to use. In addition, there may be a specific delay between a moment at which the user performs an operation on the photographing button and a moment at which the user really wants to perform photographing. Consequently, a captured image is not an image that the user wants, and user experience is affected.

### SUMMARY

This application provides an automatic photographing method and an electronic device, to resolve a technical problem that an existing photographing method mainly depends on active triggering of a user and is inconvenient to use, and photographing experience is poor.

According to a first aspect, an embodiment of this application provides an automatic photographing method applied to an electronic device. The electronic device includes an operating system, the operating system includes a hardware abstraction layer and an application layer, and the application layer includes a camera application. The method includes: After the camera application is started, the hardware abstraction layer collects, based on a preset period, an image frame sequence from image data obtained by a camera sensor, where the image frame sequence includes at least one image frame; and detects whether a semantic meaning and picture quality of each image frame meet a preset buffer condition and a preset photographing triggering condition; the hardware abstraction layer buffers the image frame if the semantic meaning and the picture quality of the image frame meet the buffer condition; if the semantic meaning and the picture quality of the image frame meet the photographing triggering condition, the hardware abstraction layer invokes a preset photographing algorithm to process to-be-photographed data to generate a photographing result, where the to-be-photographed data includes at least one of a currently buffered image frame, an image frame whose semantic meaning and picture quality meet the preset photographing triggering condition, or image data newly obtained by the camera sensor; and the hardware abstraction layer sends the photographing result to the camera application.

According to the technical solution provided in this embodiment of this application, the hardware abstraction layer may collect the image frame sequence from the image data obtained by the camera sensor, and detect the semantic meaning and the picture quality of each image frame in the image frame sequence; the hardware abstraction layer buffers the image frame if it is detected that the semantic meaning and the picture quality of the image frame meet the preset buffer condition; and if it is detected that the semantic meaning and the picture quality of the image frame meet the preset photographing triggering condition, the hardware abstraction layer invokes the preset photographing algorithm to process the to-be-photographed data to generate the photographing result. An entire process does not need to be actively triggered by a user. The hardware abstraction layer may detect each frame of image in real time after the camera application is started, and automatically buffers the image or automatically triggers photographing when the image meets a preset condition. This is not only relatively convenient for photographing, but also can obtain a photographing result with relatively high quality, thereby greatly improving photographing experience of the user.

In an implementation, that the hardware abstraction layer detects whether a semantic meaning and picture quality of each image frame meet a preset buffer condition and a preset photographing triggering condition includes: The hardware abstraction layer performs semantic recognition on each image frame to obtain a semantic recognition result of the image frame; the hardware abstraction layer generates a score of the image frame based on the semantic recognition result of the image frame and a picture quality level of the image frame; the hardware abstraction layer determines whether the score of the image frame is in a first threshold range corresponding to the preset buffer condition; if the score of the image frame is in the first threshold range, the hardware abstraction layer determines that the semantic meaning and the picture quality of the image frame meet the buffer condition; the hardware abstraction layer determines whether the score of the image frame is in a second threshold range corresponding to the preset photographing triggering condition; and if the score of the image frame is in the second threshold range, the hardware abstraction layer determines that the semantic meaning and the picture quality of the image frame meet the photographing triggering condition. In this way, an image element included in the image frame and a picture quality level of the image frame may be comprehensively scored, and then a score is compared with a threshold range corresponding to a preset condition. If the score is in a corresponding threshold range, it is determined that the image frame meets a corresponding condition. Overall consideration is relatively comprehensive, and determining of the image frame is relatively accurate and is easy to implement.

In an implementation, the method further includes: Before the camera application is started, the hardware abstraction layer sends a capability value that supports an automatic photographing function to the camera application; and after the camera application is started, the hardware abstraction layer configures the automatic photographing function based on the capability value. In this way, configuration of the automatic photographing function is relatively convenient and is simpler and easier to implement.

In an implementation, the hardware abstraction layer includes a collection engine, a frame selection module, a perception algorithm module, a buffering module, and a photographing management module. That the hardware abstraction layer buffers the image frame includes: The collection engine collects, based on the preset period, the image frame sequence from the image data obtained by the camera sensor, and sends the image frame sequence to the frame selection module and the perception algorithm module; and after detecting that the semantic meaning and the picture quality of the image frame meet the buffer condition, the perception algorithm module sends a first instruction to the photographing management module; and in response to the first instruction, the photographing management module controls the frame selection module to send the image frame to the buffering module for buffering. In this way, an image frame that meets the buffer condition may be first buffered, which facilitates quality comparison between a plurality of image frames, to ensure that an image frame with best quality can be selected in real time. When photographing is performed based on a requirement by using buffered data, quality of a captured image can be better ensured.

In an implementation, that the hardware abstraction layer invokes a preset photographing algorithm to process to-be-photographed data to generate a photographing result includes: After detecting that the semantic meaning and the picture quality of the image frame meet the photographing triggering condition, the perception algorithm module sends a second instruction to the photographing management module; the photographing management module obtains the to-be-photographed data in response to the second instruction; and the photographing management module invokes the preset photographing algorithm to process the to-be-photographed data to generate the photographing result.

In an implementation, that the photographing management module obtains the to-be-photographed data in response to the second instruction includes: The photographing management module obtains a currently buffered image frame from the buffering module in response to the second instruction. In this way, the hardware abstraction layer may perform photographing based on a requirement by using the buffered image, to better ensure quality of a captured image.

In an implementation, the method further includes: The camera application sends a photographing request to the hardware abstraction layer; the hardware abstraction layer obtains a current image frame in response to the photographing request, where the current image frame is an image frame collected by the hardware abstraction layer at a current moment from the image data obtained by the camera sensor; the hardware abstraction layer invokes the preset photographing algorithm to process the current image frame to generate the photographing result; and the hardware abstraction layer sends the photographing result to the camera application. In this way, the hardware abstraction layer may directly perform manual photographing in response to the photographing request delivered by the camera application. In this way, both manual direct photographing and automatically triggered photographing may be considered, so that a user can select different photographing manners based on an actual requirement, and a photographing manner can be more flexible.

In an implementation, before the hardware abstraction layer invokes the preset photographing algorithm to process the current image frame, the method further includes: The hardware abstraction layer sends a thumbnail of the current image frame to the camera application. In this way, before a real image is generated, a thumbnail may be first provided for a user to preview, so that the user can determine a subsequent operation based on a preview effect, a user requirement is better met, and user experience is better.

In an implementation, the hardware abstraction layer includes a collection engine, a frame selection module, a perception algorithm module, and a photographing management module. That the hardware abstraction layer obtains a current image frame in response to the photographing request includes: The collection engine collects, based on the preset period, the image frame sequence from the image data obtained by the camera sensor, and sends the image frame sequence to the frame selection module and the perception algorithm module; the perception algorithm module sends a third instruction to the photographing management module in response to the photographing request; and the photographing management module obtains the current image frame from the frame selection module in response to the third instruction.

In an implementation, that the hardware abstraction layer invokes the preset photographing algorithm to process the current image frame to generate the photographing result includes: The photographing management module obtains, from the frame selection module, a rest image frame required by the preset photographing algorithm; and the photographing management module invokes the preset photographing algorithm to process the rest image frame and the current image frames to generate the photographing result. In this way, an architecture of the hardware abstraction layer does not interfere with normal execution of a conventional manual photographing instruction while self-triggered photographing is performed, so that a user requirement can be better met.

According to a second aspect, an embodiment of this application provides an electronic device, including a processor, a memory, and a communication interface. The memory stores one or more program instructions. When the program instructions are executed by the processor, the electronic device is enabled to perform the method in the first aspect and the implementations of the first aspect.

### BRIEF DESCRIPTION OF DRAWINGS

FIG. 1A and FIG. 1B are a schematic diagram in which an electronic device displays a photographing preview interface;
FIG. 2 is a schematic diagram of a conventional photographing architecture in an electronic device;
FIG. 3 is a schematic diagram of a photographing procedure performed by a hardware abstraction layer in a conventional photographing architecture;
FIG. 4 is a schematic diagram of a hardware structure of an electronic device according to an embodiment of this application;
FIG. 5 is a schematic diagram of a working procedure of an automatic photographing method according to an embodiment of this application;
FIG. 6 is a schematic diagram of data interaction in which a hardware abstraction layer buffers an image frame in an implementation of an automatic photographing method according to an embodiment of this application;
FIG. 7 is a schematic diagram of data interaction of automatic photographing in an implementation of an automatic photographing method according to an embodiment of this application;
FIG. 8 is a schematic diagram of an interface for automatically triggering photographing in a photographing preview mode by using an automatic photographing method according to an embodiment of this application;
FIG. 9 is a schematic diagram of an interface for automatically triggering photographing in a video recording mode by using an automatic photographing method according to an embodiment of this application;
FIG. 10 is a schematic diagram of a working procedure of another automatic photographing method according to an embodiment of this application;
FIG. 11A and FIG. 11B are a schematic diagram of data interaction in an implementation of another automatic photographing method according to an embodiment of this application;
FIG. 12 is a schematic diagram of a specific photographing procedure performed by a self-triggered photographing architecture according to an embodiment of this application; and
FIG. 13 is a schematic diagram of a structure of an automatic photographing apparatus according to an embodiment of this application.

### DESCRIPTION OF EMBODIMENTS

The following describes technical solutions in embodiments of this application with reference to the accompanying drawings in the embodiments of this application.

The terms used in the following embodiments are merely used for describing specific embodiments, and are not intended to limit this application. As used in the specification and the appended claims of this application, singular expressions "one", "a", "the", "the foregoing", and "this" are also intended to include an expression such as "one or more", unless contrary indication is clearly specified in the context. It should be further understood that in the following embodiments of this application, "at least one" and "one or more" mean one, two, or more than two. The term "and/or" is used to describe an association relationship between associated objects, and indicates that three relationships may exist. For example, "A and/or B" may represent the following cases: Only A exists, both A and B exist, and only B exists, where A and B may be singular or plural. The character "/" usually indicates an "or" relationship between associated obj ects.

As described in the specification, referring to "one embodiment", "some embodiments", or the like means that one or more embodiments of this application include particular features, structures, or characteristics described with reference to the embodiment. Therefore, statements such as "in one embodiment", "in some embodiments", "in some other embodiments", or "in some other embodiments" that appear in different parts of this application do not necessarily refer to same embodiments, but mean "one or more but not all embodiments", unless otherwise specifically emphasized in another manner. The terms "include", "comprise", "have", and variants thereof all mean "include but are not limited to", unless otherwise specifically emphasized in another manner.

An electronic device includes a mobile phone, a tablet computer, a notebook computer, an ultra-mobile personal computer (ultra-mobile personal computer, UMPC), a handheld computer, a netbook, a personal digital assistant (personal digital assistant, PDA), a smart wearable device, a virtual reality device, and the like. A camera application in the electronic device is one of most frequently used applications in the electronic device, and is mainly used to control a camera assembly to perform photographing. The camera assembly includes a camera and a camera sensor. After the camera application is started, the electronic device enters a photographing preview mode, and displays a photographing preview interface.

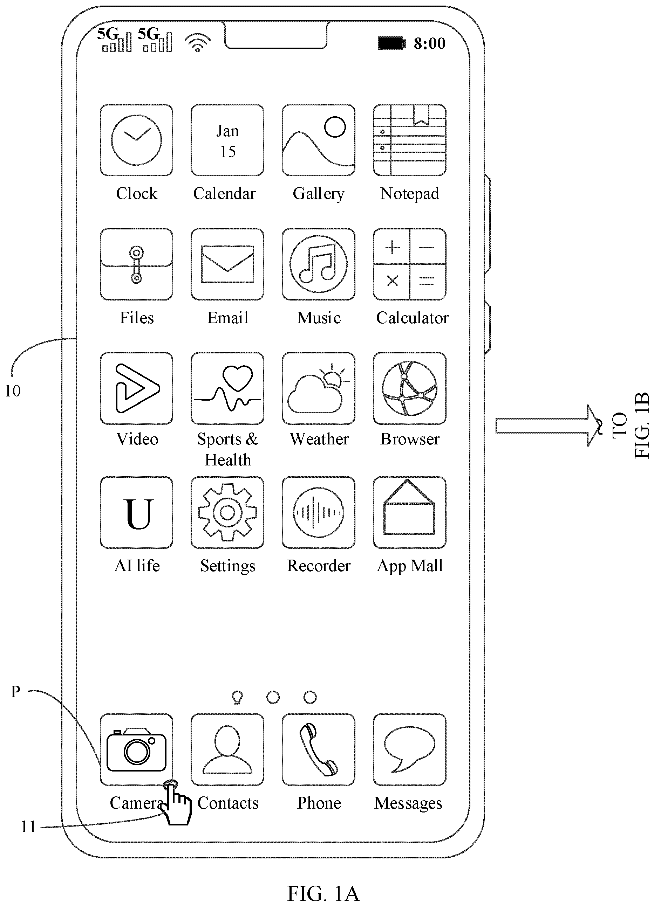

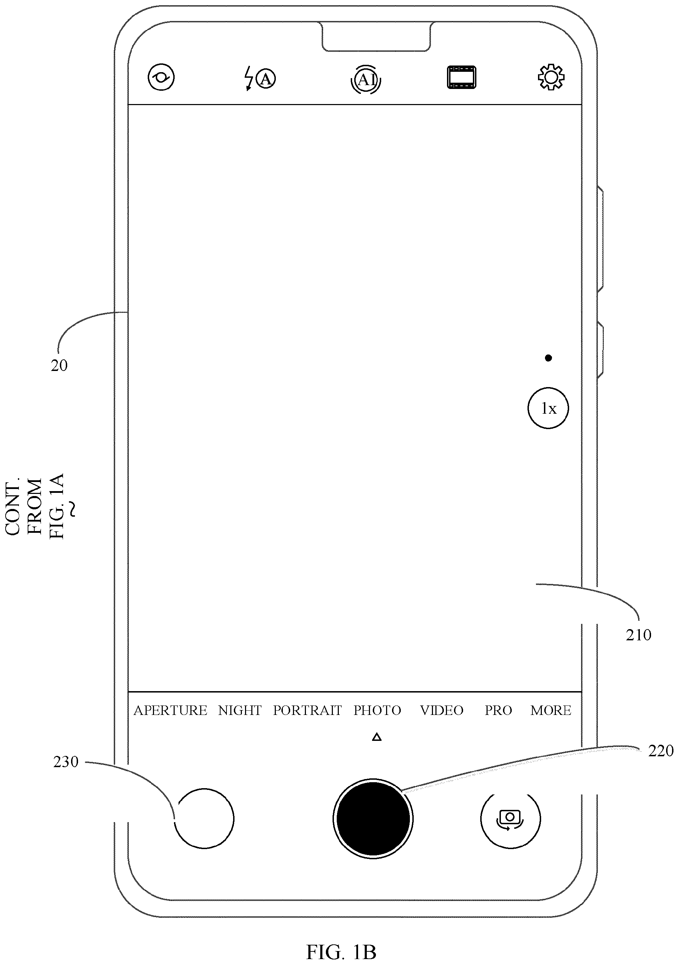

Using a mobile phone as an example, FIG. 1A and FIG. 1B are a schematic diagram in which an electronic device displays a photographing preview interface. As shown in FIG. 1A, a home screen interface 10 of the electronic device includes a Dock area in a lowest part and a current page displayed in full screen on a display. The Dock area may include common applications such as Camera P, Contacts, Phone, and Messages. In response to a tap operation 11 performed by a user on the Camera P in the home screen interface 10, the electronic device may enter a photographing preview mode, and display a photographing preview interface 20. The photographing preview interface 20 includes a preview area 210, an editing bar, a photographing mode switching bar, a photographing button 220, a camera switching button, and a photographing result thumbnail display area 230. The preview area 210 is located in an interface center, and is configured to display a photographing area of a camera. The editing bar is located above the preview area 210, includes a plurality of function options such as flash adjustment and photographing parameter setting, and is configured to edit a photographing parameter. The photographing mode switching bar is located below the preview area 210, includes a plurality of photographing mode options such as APERTURE, NIGHT, PORTRAIT, PHOTO, VIDEO, and PRO, and is configured to switch a photographing mode. The photographing button 220 is exactly located in the middle at a bottom, and is configured to instruct a user to operate the photographing button 220 to trigger photographing. The camera switching button is located on a right side of the photographing button 220, and is configured to switch between a front-facing camera and a rear-facing camera. The photographing result thumbnail display area 230 is located on a left side of the photographing button 220, and is configured to display a thumbnail of a latest imaged image frame. Next, the electronic device may enable a snapshot function in response to a tap operation performed by a user on the photographing button 220, or the electronic device may enable the snapshot function in response to an operation performed by a user on a snapshot option in photographing parameter setting in the editing bar; then control an internal photographing module to drive the camera to image the photographing area; and finally store a generated photographing result in an album application of the electronic device.

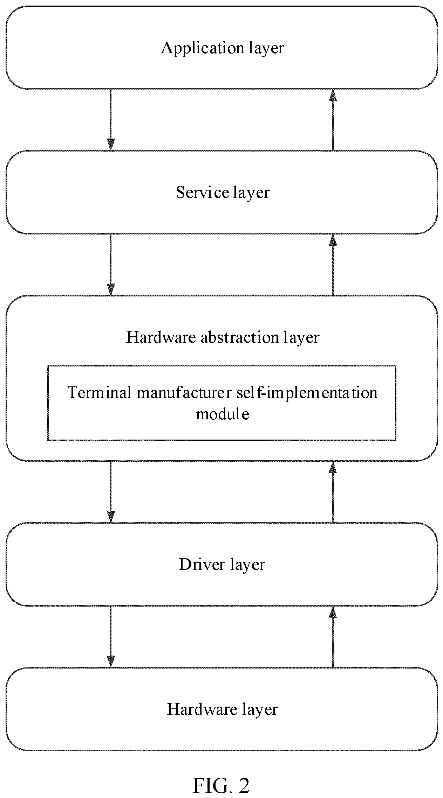

FIG. 2 is a schematic diagram of a conventional photographing architecture in an electronic device. As shown in FIG. 2, a mobile phone with an Android system is used as an example. The photographing architecture in the electronic device mainly includes an application layer, a service layer, a hardware abstraction layer, a driver layer, and a hardware layer. During photographing, the application layer delivers a photographing request, and the photographing request passes through the service layer, and may reach the hardware abstraction layer through an HIDL standard interface. The hardware abstraction layer includes a terminal manufacturer self-implementation module, and the terminal manufacturer self-implementation module is implemented and extended by each platform manufacturer, to further sequentially control the driver layer and the hardware layer to implement the photographing request. Finally, after implementing the photographing request and generating a photographing result, the hardware layer sequentially transmits the photographing result back to the driver layer, the hardware abstraction layer, and the service layer. Finally, the photographing result may be called back to the application layer through an HAL3 interface and presented to a user.

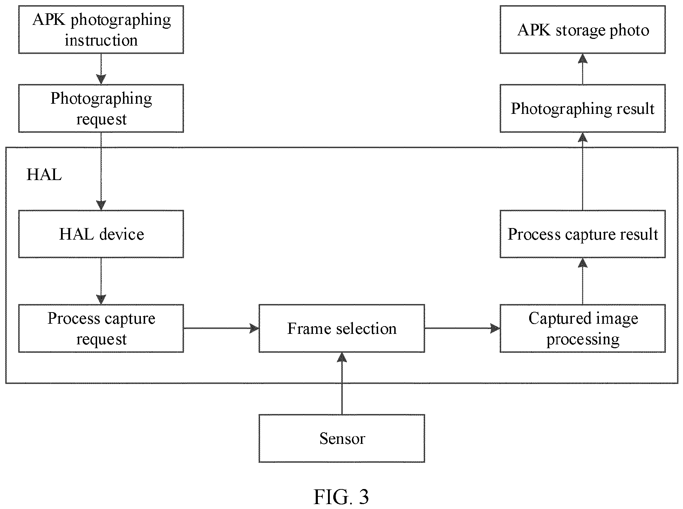

FIG. 3 is a schematic diagram of a photographing procedure performed by a hardware abstraction layer in a conventional photographing architecture. As shown in FIG. 3, a mobile phone with an Android system is used as an example. After obtaining a photographing request based on an APK (Android application package, Android application package) photographing instruction, a hardware abstraction layer (Hardware Abstraction Layer, HAL) device generates a process capture request (Process Capture Request); then obtains a frame of image from image data obtained by a camera sensor (sensor), and performs captured image processing on the obtained frame of image to generate a process capture result (Process Capture Result); and finally generates a photographing result, and generates an APK storage photo.

When a to-be-photographed area is in a dynamically changing scenario, for example, in a high-speed movement scenario, the foregoing conventional photographing method may cause the following case: When the user presses the photographing button, the electronic device cannot focus a focus point on a photographed subject, and consequently, a captured image is of poor picture quality and cannot be used. However, after the snapshot function is enabled, photographing still mainly depends on active triggering of the user and is inconvenient to use. In addition, there may be a specific delay between a moment at which the user performs an operation on the photographing button and a moment at which the user really wants to perform photographing. Consequently, a captured image is not an image that the user wants, and user experience is affected.

To enable a user to conveniently capture a desired image and improve photographing experience of the user, embodiments of this application provide an automatic photographing method. The automatic photographing method provided in the embodiments of this application is applied to an electronic device, and the electronic device includes but is not limited to a mobile phone, a notebook computer, a tablet computer, a personal desktop computer, an all-in-one computer, a large-screen display device, a virtual/hybrid/augmented reality device, and the like. Specifically, the electronic device includes an operating system, the operating system includes a hardware abstraction layer and an application layer, and the application layer includes a camera application. The operating system may include an Android system, an IOS system, a LINUX system, and the like. The camera application may include a camera application included in the electronic device and another third-party camera application installed in the electronic device.

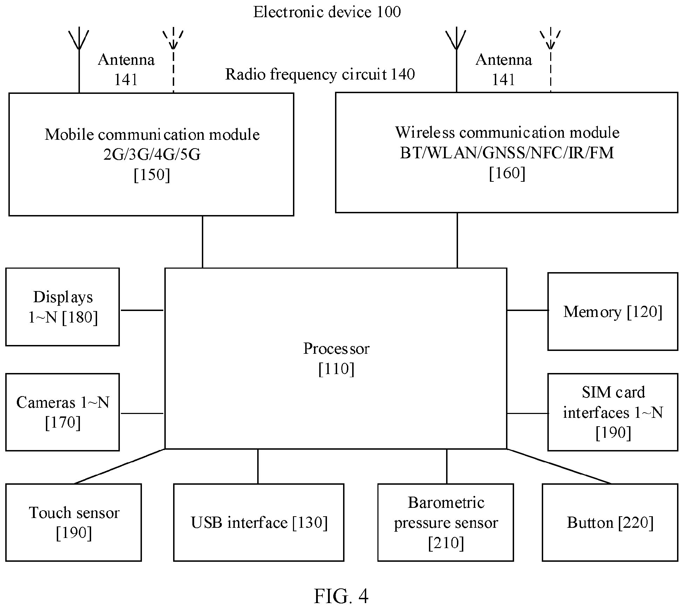

FIG. 4 is a schematic diagram of a hardware structure of an electronic device according to an embodiment of this application. As shown in FIG. 4, an electronic device 100 may include a processor 110, a memory 120, a universal serial bus (universal serial bus, USB) interface 130, a radio frequency circuit 140, a mobile communication module 150, a wireless communication module 160, a camera 170, a display 180, a touch sensor 190, a barometric pressure sensor 210, a button 220, and the like.

The processor 110 may include one or more processing units. For example, the processor 110 may include an application processor (application processor, AP), a modem processor, a graphics processing unit (graphics processing unit, GPU), an image signal processor (image signal processor, ISP), a video codec, a digital signal processor (digital signal processor, DSP), a baseband processor, a neural-network processing unit (neural-network processing unit, NPU), and/or the like. Different processing units may be independent devices, or may be integrated into one or more processors, for example, integrated into a system on a chip (system on a chip, SoC). A memory may be further disposed in the processor 110, and is configured to store instructions and data. In some embodiments, the memory in the processor 110 is a cache. The memory may store instructions or data just used or cyclically used by the processor 110.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The memory 120 may be configured to store computer-executable program code, and the executable program code includes instructions. The memory 120 may include a program storage area and a data storage area. The program storage area may store an operating system, an application required by at least one function (for example, a sound playing function or an image playing function), and the like. The data storage area may store data (such as audio data and a phone book) and the like created during use of the electronic device 100. In addition, the memory 120 may include one or more storage units. For example, the storage unit may include a volatile memory (volatile memory) such as a dynamic random access memory (dynamic random access memory, DRAM) or a static random access memory (static random access memory, SRAM); or may include a non-volatile memory (non-volatile memory, NVM) such as a read-only memory (read-only memory, ROM) or a flash memory (flash memory). The processor 110 performs various function applications and data processing of the electronic device 100 by running the instructions stored in the memory 120 and/or the instructions stored in the memory disposed in the processor.

A wireless communication function of the electronic device 100 may be implemented by using the radio frequency circuit 140, the mobile communication module 150, the wireless communication module 160, the modem processor, the baseband processor, and the like.

The radio frequency circuit 140 may include at least one antenna 141, configured to transmit and receive an electromagnetic wave signal. Each antenna in the electronic device 100 may be configured to cover one or more communication frequency bands. In some embodiments, the antenna may be used in combination with a tuning switch.

The mobile communication module 150 may provide a solution for wireless communication including 2G/3G/4G/5G and the like applied to the electronic device 100. The mobile communication module 150 may include at least one filter, switch, power amplifier, low noise amplifier (low noise amplifier, LNA), and the like. The mobile communication module 150 may receive an electromagnetic wave by using the antenna 141, perform processing such as filtering and amplification on the received electromagnetic wave, and transfer a processed electromagnetic wave to the modem processor for demodulation. The mobile communication module 150 may further amplify a signal obtained after modulation by the modem processor, and convert the signal into an electromagnetic wave by using the antenna 141 for radiation. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal by using an audio device (including but not limited to a speaker, a receiver, and the like), or displays an image or a video by using the display 180. In some embodiments, the modem processor may be an independent device. In some other embodiments, the modem processor may be independent of the processor 110, and is disposed in a same device as the mobile communication module 150 or another functional module.

The wireless communication module 160 may include a wireless fidelity (wireless fidelity, Wi-Fi) module, a Bluetooth (bluetooth, BT) module, a GNSS module, a near field communication (near field communication, NFC) module, an infrared (infrared, IR) module, and the like. The wireless communication module 160 may be one or more devices integrating at least one of the foregoing modules. The wireless communication module 160 receives an electromagnetic wave by using the antenna 141, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave by using the antenna 141 for radiation.

In this embodiment of this application, the wireless communication function of the electronic device 100 may include, for example, functions such as a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), 5th generation mobile networks new radio (5th generation mobile networks new radio, 5G NR), BT, a GNSS, a WLAN, NFC, FM, and/or IR. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The camera 170 is configured to capture a still image or a video. The camera 170 includes a lens and a photosensitive element. An optical image is generated for an object by using the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB, YUV, or RYYB. In some embodiments, the electronic device 100 may include one or M cameras 170, where M is a positive integer greater than 1.

The NPU is a neural-network (neural-network, NN) computing processor, which quickly processes input information by referring to a biological neural network structure, for example, by referring to a transmission mode between human brain neurons, and may further perform self-learning continuously. Applications such as intelligent cognition of the electronic device 100, for example, image recognition, face recognition, speech recognition, and text understanding, may be implemented by using the NPU.

The display 180 is configured to display an image, a video, or the like. The display 180 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a MiniLED, a MicroLED, a Micro-OLED, a quantum dot light emitting diode (quantum dot light emitting diodes, QLED), or the like. In some embodiments, the electronic device 100 may include one or M displays 180, where M is a positive integer greater than 1.

The touch sensor 190 is also referred to as a "touch device". The touch sensor 190 may be disposed on the display 180. The touch sensor 190 and the display 180 form a touchscreen, which is also referred to as a "touch control screen". The touch sensor 190 is configured to detect a touch operation performed on or near the touch sensor 190. The touch sensor may transfer a detected touch operation to the application processor to determine a type of a touch event. A visual output related to the touch operation may be provided by using the display 180. In some other embodiments, the touch sensor 190 may alternatively be disposed on a surface of the electronic device 100, at a location different from that of the display 180.

The barometric pressure sensor 210 is configured to measure barometric pressure. In some embodiments, the electronic device 100 calculates an altitude by using a barometric pressure value measured by the barometric pressure sensor 210, to assist in positioning and navigation.

The button 220 includes a power on/off button, a volume button, and the like. The button 220 may be a mechanical button, or may be a touch button. The electronic device 100 may receive a key input and generate a key signal input related to user settings and function control of the electronic device 100.

It may be understood that the structure illustrated in this embodiment of this application constitutes no specific limitation on the electronic device 100. In some other embodiments of this application, the electronic device may include more or fewer components than those shown in the figure, or combine some components, or split some components, or have different component arrangements. The components shown in the figure may be implemented by using hardware, software, or a combination of software and hardware.

The solutions provided in this application are described below with reference to the accompanying drawings by using the embodiments.

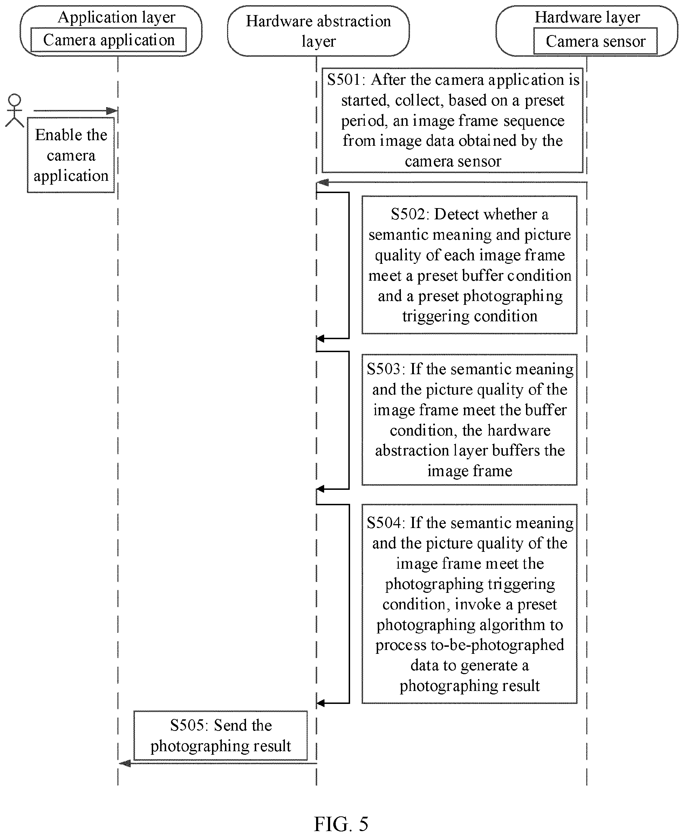

FIG. 5 is a schematic diagram of a working procedure of an automatic photographing method according to an embodiment of this application. The automatic photographing method provided in this embodiment of this application is applied after an automatic photographing function is enabled. As shown in FIG. 5, the following steps are specifically included.

Step S501: After a camera application is started, a hardware abstraction layer collects, based on a preset period, an image frame sequence from image data obtained by a camera sensor.

The image frame sequence includes at least one image frame. In the image frame sequence, the at least one image frame is arranged in an order of timestamps from early to late. The camera sensor belongs to a component at a hardware layer of an electronic device, and is configured to collect image data.

In addition, the automatic photographing method provided in this embodiment of this application may further include: Before the camera application is started, the hardware abstraction layer sends a capability value that supports the automatic photographing function to the camera application; and after the camera application is started, the hardware abstraction layer configures the automatic photographing function based on the capability value before collecting, based on the preset period, the image frame sequence from the image data obtained by the camera sensor. The hardware abstraction layer may automatically send, to the camera application after the electronic device is powered on, the capability value that supports the automatic photographing function. In this way, configuration of the automatic photographing function is relatively convenient and is simpler and easier to implement.

There are a plurality of manners in which the hardware abstraction layer configures the automatic photographing function based on the capability value. In an implementation, the camera application may configure the automatic photographing function of the hardware abstraction layer. For example, the camera application may send, to the hardware abstraction layer based on the capability value, configuration information used to configure the automatic photographing function. Specifically, after receiving the capability value that supports the automatic photographing function, that is, after determining that the electronic device has the automatic photographing function, the camera application may send, to the hardware abstraction layer, the configuration information used to configure the automatic photographing function. In addition, the camera application may not send, to the hardware abstraction layer, the configuration information used to configure the automatic photographing function. In this way, the hardware abstraction layer does not perform the automatic photographing procedure provided in this embodiment of this application, but performs photographing based on a conventional photographing procedure. In another implementation, the hardware abstraction layer may alternatively automatically configure the automatic photographing function based on configuration information that is set internally and that is used to configure the automatic photographing function. A specific configuration manner of the automatic photographing function is not specifically limited in this embodiment of this application.

Functions of the camera application may include large aperture photographing, portrait photographing, video recording, slow motion photographing, panoramic photographing, and the like. The capability value may be used to reflect a photographing capability. Generally, when the capability value is larger, the function is stronger. The configuration information used to configure the automatic photographing function may include all data for configuring the automatic photographing function, for example, triggering time and a triggering scenario that are of the automatic photographing function, and a detection method, a data flow direction, a system parameter, a photographing algorithm, a photographing parameter, a camera sensor parameter, and the like that are related to the automatic photographing function.

In addition, in this embodiment of this application, the camera application may also be used to disable the automatic photographing function of the hardware abstraction layer. Specifically, the camera application may send an automatic photographing function disabling request to the hardware abstraction layer in response to a disabling operation performed by a user on a switch of the automatic photographing function. The hardware abstraction layer disables the automatic photographing function in response to the automatic photographing function disabling request.

Step S502: The hardware abstraction layer detects whether a semantic meaning and picture quality of each image frame meet a preset buffer condition and a preset photographing triggering condition.

The buffer condition may be set based on a requirement and an actual situation. For example, the buffer condition may be set as follows: Image quality meets a preset standard, an image frame includes a target element, and so on. Specific setting of the buffer condition is not limited in this application. The photographing triggering condition may be set based on a requirement and an actual situation. For example, the photographing triggering condition may be set as follows: There is a relatively large difference between a recognized scenario of an image frame and a recognized scenario of a previous image frame. Alternatively, the photographing triggering condition may be set as follows: Image quality is very high, an image frame includes a target element, and so on. Specific setting of the photographing triggering condition is not limited in this application.

Specifically, in an implementation, the hardware abstraction layer may detect, in the following manner, whether the semantic meaning and the picture quality of each image frame meet the preset buffer condition and the preset photographing triggering condition.

First, the hardware abstraction layer performs semantic recognition on each image frame to obtain a semantic recognition result of the image frame. The semantic recognition result may include a semantic meaning and a state that are of each feature included in the image frame and a recognized scenario of the image frame. After performing feature extraction on each image frame, the hardware abstraction layer may perform semantic recognition and image analysis on an extracted feature to obtain the semantic meaning and the state that correspond to each frame, and the recognized scenario of the image frame. For example, the semantic recognition result of the image frame includes that a person is located in a central area of the image frame, an expression of the person is smiling, an action of the person is running, various scenes include trees, grass, blue sky, and white cloud, and the scenario of the image frame is an outdoor landscape.

Then, the hardware abstraction layer generates a score of the image frame based on the semantic recognition result of the image frame and a picture quality level of the image frame. The picture quality level of the image frame may include a pixel, a contrast, brightness, and the like. In an implementation, the hardware abstraction layer may score a semantic recognition result of each feature with reference to a preset scoring standard. For example, if the image frame includes a smiling person expression and a pixel of a person is greater than a first preset threshold, an A score is added to a basic score; if the image frame includes a person in a running state and a pixel of the person is greater than a second preset threshold, a B score is added to the basic score; if the image frame includes no smiling person expression, a score of this item (person) is zero based on the basic score; or if the image frame includes a person in a running state, but brightness of the person is less than a third preset threshold, a C score is subtracted from the basic score. In another implementation, the hardware abstraction layer may alternatively score the image frame as a whole. For example, if the image frame includes a person with a smiling expression, the person is located in the central area of the image frame and is in a running state, and pixels of other scenes are greater than a preset standard value, the score of the image frame is directly determined as B. A manner of performing scoring by the hardware abstraction layer is not limited in this embodiment of this application.

Next, the hardware abstraction layer determines whether the score of the image frame is in a first threshold range corresponding to the preset buffer condition. If the score of the image frame is in the first threshold range, the hardware abstraction layer determines that the semantic meaning and the picture quality of the image frame meet the buffer condition; or if the score of the image frame exceeds the first threshold range, the hardware abstraction layer determines that the semantic meaning and the picture quality of the image frame do not meet the buffer condition. Specifically, a score of a preset sample image may be used as a threshold of the first threshold range corresponding to the buffer condition, and the preset sample image may be determined based on a requirement and an actual situation.

After performing buffer determining, the hardware abstraction layer may further determine whether the score of the image frame is in a second threshold range corresponding to the preset photographing triggering condition. If the score of the image frame is in the second threshold range, the hardware abstraction layer determines that the semantic meaning and the picture quality of the image frame meet the photographing triggering condition; or if the score of the image frame exceeds the second threshold range, the hardware abstraction layer determines that the semantic meaning and the picture quality of the image frame do not meet the photographing triggering condition.

In this way, in the foregoing implementation, the hardware abstraction layer may comprehensively score an image element included in the image frame and the picture quality level of the image frame, and then compare a score with a threshold range corresponding to a preset condition. If the score is in a corresponding threshold range, it is determined that the image frame meets a corresponding condition. Overall consideration is relatively comprehensive, and determining of the image frame is relatively accurate and is easy to implement.

In another implementation, the hardware abstraction layer may alternatively respectively compare the semantic meaning and the picture quality with buffer conditions and photographing triggering conditions respectively corresponding to the semantic meaning and the picture quality. For example, if the semantic meaning meets the corresponding buffer condition and the picture quality also meets the corresponding buffer condition, the hardware abstraction layer determines that the semantic meaning and the picture quality of the image frame meet the buffer condition; otherwise, the hardware abstraction layer determines that the semantic meaning and the picture quality of the image frame do not meet the buffer condition. In another implementation, the hardware abstraction layer may alternatively detect, in another manner, whether the semantic meaning and the picture quality of the image frame meet the preset buffer condition and the preset photographing triggering condition. This is not specifically limited in this embodiment of this application.

Step S503: If the semantic meaning and the picture quality of the image frame meet the buffer condition, the hardware abstraction layer buffers the image frame.

A quantity of buffered image frames may be set based on a requirement and an actual situation. This is not specifically limited in this embodiment of this application. A buffered image frame dynamically changes. After the quantity of buffered image frames reaches a specified quantity, if a semantic meaning and picture quality of a subsequently collected image frame meet the buffer condition, the subsequently collected image frame is buffered only after the semantic meaning and the picture quality simultaneously exceed a minimum value in all currently buffered image frames.

Step S504: If the semantic meaning and the picture quality of the image frame meet the photographing triggering condition, the hardware abstraction layer invokes a preset photographing algorithm to process to-be-photographed data to generate a photographing result.

The to-be-photographed data may include at least one of a currently buffered image frame, an image frame whose semantic meaning and picture quality meet the preset photographing triggering condition, or image data newly obtained by the camera sensor. Specifically, selection of the to-be-photographed data is determined based on a semantic meaning and picture quality of an image frame that triggers photographing and a preset photographing rule. For example, a recognized scenario of the image frame that triggers photographing is different from a recognized scenario of a currently buffered image frame, and the photographing rule may be set as follows: Photographing is performed by using the currently buffered image frame. In this way, when scenario switching starts, buffered image frames of a previous scenario may be taken out from a buffer, and these buffered image frames are used to photograph the previous scenario, to prevent a user from missing any wonderful moment, and an image frame of a new scenario may be further buffered. For another example, the semantic meaning and the picture quality of the image frame that triggers photographing meet a highest standard, and the photographing rule may be set as follows: Photographing is performed by using the image frame. When photographing is performed by using the image frame, the hardware abstraction layer may obtain a single image frame or a plurality of image frames based on a requirement of the preset photographing algorithm to perform photographing. When a plurality of image frames are obtained for photographing, an image frame whose semantic meaning and picture quality meet a highest standard may be used as a raw image frame, and a rest image frame near the raw image frame is obtained for joint photographing. The rest image frame near the raw image frame may include at least one of a buffered image frame or image data newly obtained by the camera sensor.

In this embodiment of this application, the preset photographing algorithm is a preset processing algorithm corresponding to a photographing mode that is in the electronic device and that matches a current scenario, and the current scenario is a recognized scenario corresponding to the image frame that triggers photographing. The preset photographing algorithm may specifically include multi-frame fusion, dynamic adjustment, light adjustment, or the like. The hardware abstraction layer may invoke a corresponding photographing algorithm based on a specific scenario of an image frame to perform processing.

In addition, in step S503 and step S504, if the semantic meaning and the picture quality of the image frame meet neither the buffer condition nor the photographing triggering condition, the image frame may be directly discarded. Alternatively, if the semantic meaning and the picture quality of the image frame meet both the buffer condition and the photographing triggering condition, the image frame may be buffered, and the preset photographing algorithm is invoked to photograph the to-be-photographed data.

It should be noted that, step S503 and step S504 may be performed simultaneously, or step S503 may be performed first and then step S504 is performed. This is not specifically limited in this embodiment of this application.

Step S505: The hardware abstraction layer sends the photographing result to the camera application.

Specifically, the hardware abstraction layer may call back the photographing result to the camera application through a private interface, to provide the photographing result for a user to view. Finally, the photographing result is stored at a specified storage location in the electronic device, for example, in an album.

According to the technical solution provided in this embodiment of this application, the hardware abstraction layer may collect the image frame sequence from the image data obtained by the camera sensor, and detect the semantic meaning and the picture quality of each image frame in the image frame sequence; the hardware abstraction layer buffers the image frame if it is detected that the semantic meaning and the picture quality of the image frame meet the preset buffer condition; and if it is detected that the semantic meaning and the picture quality of the image frame meet the preset photographing triggering condition, the hardware abstraction layer invokes the preset photographing algorithm to process the to-be-photographed data to generate the photographing result. An entire process does not need to be actively triggered by a user. The hardware abstraction layer may detect each frame of image in real time after the camera application is started, and automatically buffers the image or automatically triggers photographing when the image meets a preset condition. This is not only relatively convenient for photographing, but also can obtain a photographing result with relatively high quality, thereby greatly improving photographing experience of the user.

In an implementation of the automatic photographing method provided in this embodiment of this application, the hardware abstraction layer may include a collection engine, a frame selection module, a perception algorithm module, a buffering module, and a photographing management module.

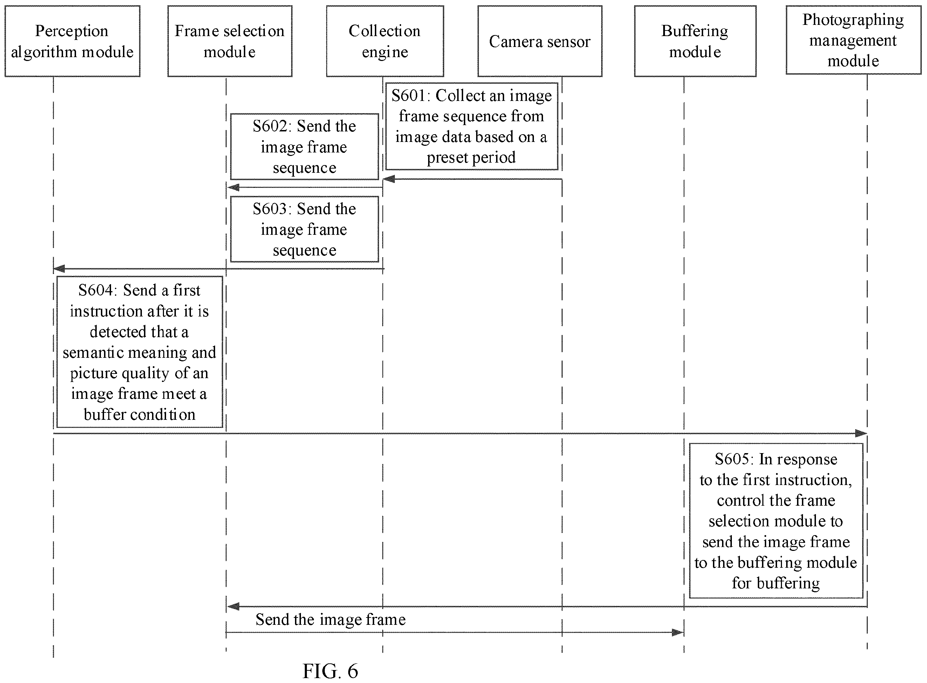

FIG. 6 is a schematic diagram of data interaction in which a hardware abstraction layer buffers an image frame in an implementation of an automatic photographing method according to an embodiment of this application. As shown in FIG. 6, a process in which modules interact with a camera sensor when the hardware abstraction layer buffers an image frame includes the following steps.

Step S601: A collection engine collects, based on a preset period, an image frame sequence from image data obtained by the camera sensor.

The image frame sequence includes at least one image frame. In the image frame sequence, the at least one image frame is arranged in an order of timestamps from early to late. The camera sensor belongs to a component at a hardware layer of an electronic device, and is configured to collect image data. The image data obtained by the camera sensor may be a continuous signal.

Step S602: The collection engine sends the image frame sequence to a frame selection module.

Specifically, each time collecting an image frame, the collection engine may send the image frame to the frame selection module.

Step S603: The collection engine also sends the image frame sequence to a perception algorithm module.

Step S603 and step S602 may be performed simultaneously. To be specific, each time collecting an image frame, the collection engine may simultaneously send the image frame to the frame selection module and the perception algorithm module.

Step S604: The perception algorithm module sends a first instruction to a photographing management module after detecting that a semantic meaning and picture quality of the image frame meet a buffer condition.

The first instruction is used to instruct the photographing management module to control the frame selection module to send the image frame to a buffering module for buffering. The perception algorithm module sends the first instruction to the photographing management module each time detecting that a semantic meaning and picture quality of an image frame meet the buffer condition. If the perception algorithm module detects that the semantic meaning and the picture quality of the image frame do not meet the buffer condition, the perception algorithm module may not send the first instruction to the photographing management module.

Step S605: In response to the first instruction, the photographing management module controls the frame selection module to send the image frame to the buffering module for buffering.

The buffering module may buffer a preset quantity of image frames, and the preset quantity may be specifically set based on a requirement and an actual situation. This is not specifically limited in this embodiment of this application.

In this way, when buffering is performed in the foregoing manner, an image frame that meets the buffer condition may be first buffered, which facilitates quality comparison between a plurality of image frames, to ensure that an image frame with best quality can be selected in real time. When photographing is performed based on a requirement by using buffered data, quality of a captured image can be better ensured.

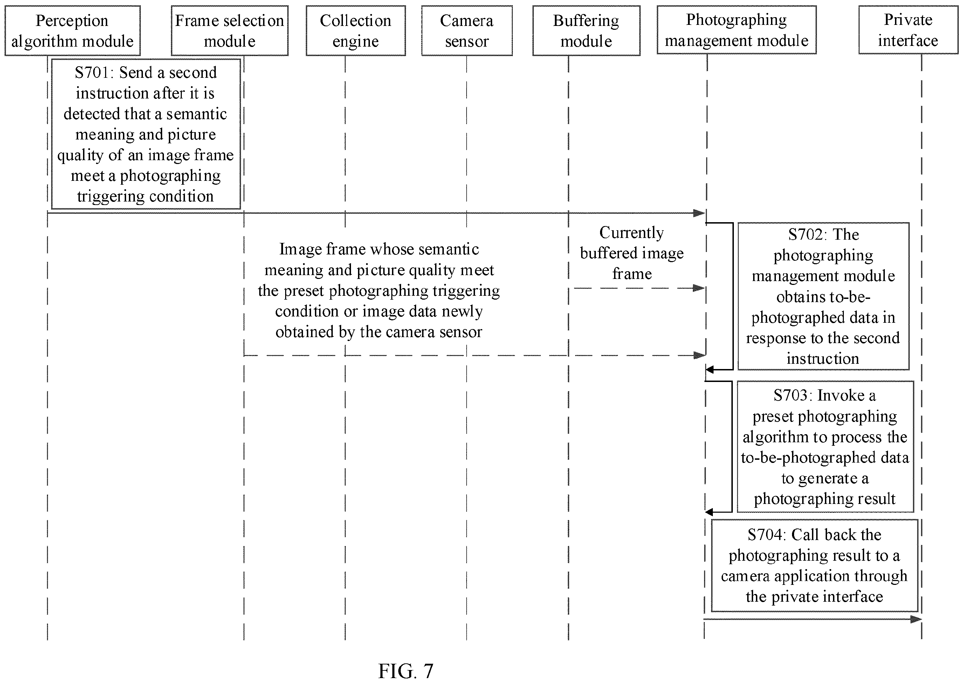

FIG. 7 is a schematic diagram of data interaction of automatic photographing in an implementation of an automatic photographing method according to an embodiment of this application. In an implementation of the automatic photographing method provided in this embodiment of this application, in addition to step S601 to step S605 performed in interaction between the modules at the hardware abstraction layer and the camera sensor, as shown in FIG. 7, a process in which the modules interact with the camera sensor when the hardware abstraction layer performs automatic photographing includes the following steps.

Step S701: The perception algorithm module sends a second instruction to the photographing management module after detecting that the semantic meaning and the picture quality of the image frame meet a photographing triggering condition.

Specifically, the second instruction is used to instruct the photographing management module to obtain to-be-photographed data from the buffering module or the frame selection module, and invoke a preset photographing algorithm to process the obtained to-be-photographed data to generate a photographing result.

Step S702: The photographing management module obtains the to-be-photographed data in response to the second instruction.

Specifically, the photographing management module may obtain a currently buffered image frame from the buffering module in response to the second instruction. In this way, the hardware abstraction layer may perform photographing based on a requirement by using the buffered image, to better ensure quality of a captured image. Alternatively, the photographing management module may obtain, from the frame selection module, at least one of an image frame whose semantic meaning and picture quality meet the preset photographing triggering condition or image data newly obtained by the camera sensor.

Step S703: The photographing management module invokes the preset photographing algorithm to process the to-be-photographed data to generate a photographing result.

Specifically, in a photographing process, the photographing management module may obtain, from the buffering module or the frame selection module based on the preset photographing algorithm, all image frames required by the preset photographing algorithm, and generate a photographing result after processing all the obtained image frames based on the preset photographing algorithm. All the image frames required by the preset photographing algorithm include a raw image frame and a rest image frame.

Step S704: The photographing management module calls back the photographing result to a camera application through a private interface.

Specifically, there are a plurality of types of private interfaces, for example, an HAL3 interface. This is not specifically limited in this embodiment of this application.

In the foregoing implementation, the hardware abstraction layer may perform photographing based on a requirement by using the buffered image, to better ensure quality of a captured image, and overcome a problem that a difference exists between a moment of an actual photographing operation performed by a user and a moment at which the user really wants to perform photographing, so that a captured image is what the user really desires and wants.

It should be noted that, according to the method provided in this embodiment of this application, after the camera application is started, photographing may be automatically triggered in different photographing modes.

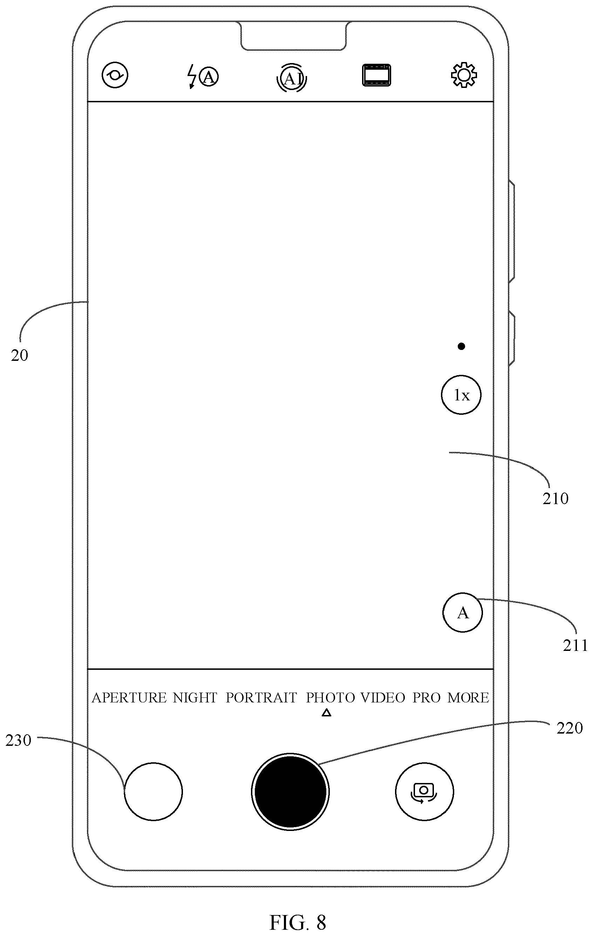

FIG. 8 is a schematic diagram of an interface for automatically triggering photographing in a photographing preview mode by using an automatic photographing method according to an embodiment of this application. For example, as shown in FIG. 8, when an automatic photographing function is enabled, an electronic device enters the photographing preview mode, and displays a photographing preview interface 20. The photographing preview interface 20 includes a preview area 210, an editing bar, a photographing mode switching bar, a photographing button 220, a camera switching button, and a photographing result thumbnail display area 230. The preview area 210 is located in an interface center, and is configured to display a photographing area of a camera. A prompt corner mark 211 is displayed on one side of the preview area 210, and is configured to prompt that the automatic photographing function is currently enabled. When the electronic device detects an image frame whose semantic meaning and picture quality meet a preset condition and is performing photographing, the prompt corner mark 211 may blink to indicate that automatic photographing is currently being performed. The editing bar is located above the preview area 210, includes a plurality of function options such as flash adjustment and photographing parameter setting, and is configured to edit a photographing parameter. The photographing mode switching bar is located below the preview area 210, includes a plurality of photographing mode options such as APERTURE, NIGHT, PORTRAIT, PHOTO, VIDEO, and PRO, and is configured to switch a photographing mode. The photographing button 220 is exactly located in the middle at a bottom, and is configured to instruct a user to operate the photographing button 220 to trigger photographing. The camera switching button is located on a right side of the photographing button 220, and is configured to switch between a front-facing camera and a rear-facing camera. The photographing result thumbnail display area 230 is located on a left side of the photographing button 220, and is configured to display a thumbnail of a latest imaged image frame. Next, when detecting an image frame that meets the preset condition, the electronic device automatically performs photographing, and then stores a generated photographing result in an album application of the electronic device. In this way, in the photographing preview mode, the electronic device can automatically trigger photographing without active triggering of a user. This is not only relatively convenient for photographing, but also can obtain a photographing result with relatively high quality, thereby greatly improving photographing experience of the user.

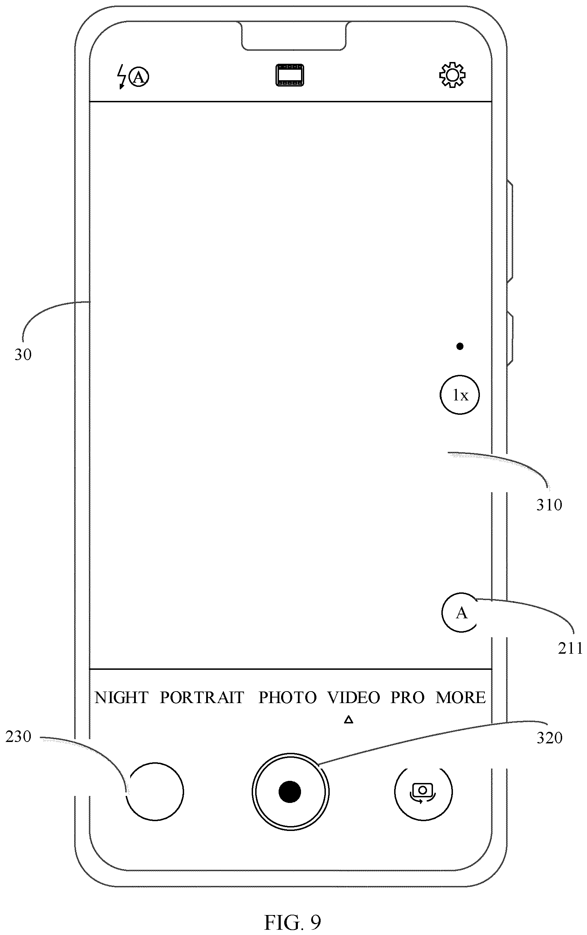

FIG. 9 is a schematic diagram of an interface for automatically triggering photographing in a video recording mode by using an automatic photographing method according to an embodiment of this application. For example, as shown in FIG. 9, when an automatic photographing function is enabled, an electronic device enters the video recording mode, and displays a video recording interface 30. The video recording interface 30 includes a video preview area 310, an editing bar, a photographing mode switching bar, a video recording button 320, a camera switching button, and a photo thumbnail display area 230. The video preview area 310 is located in an interface center, and is configured to display a photographing area of a camera. A prompt corner mark 211 is displayed on one side of the video preview area 310, and is configured to prompt that the automatic photographing function is currently enabled. When the electronic device detects an image frame whose semantic meaning and picture quality meet a preset condition and is performing photographing, the prompt corner mark 211 may blink to indicate that automatic photographing is currently being performed. The editing bar is located above the video preview area 310, includes a plurality of function options such as flash adjustment and photographing parameter setting, and is configured to edit a photographing parameter. The photographing mode switching bar is located below the video preview area 310, includes a plurality of photographing mode options such as APERTURE, NIGHT, PORTRAIT, PHOTO, VIDEO, and PRO, and is configured to switch a photographing mode. The video recording button 320 is exactly located in the middle at a bottom, and is configured to instruct a user to operate the video recording button 320 to trigger video recording. The camera switching button is located on a right side of the video recording button 320, and is configured to switch between a front-facing camera and a rear-facing camera. The photographing result thumbnail display area 230 is located on a left side of the video recording button 320, and is configured to display a latest imaged image frame or a thumbnail of a latest video recording result. Next, when detecting an image frame that meets the preset condition, the electronic device reuses a photographing algorithm to automatically capture the image frame, and then stores a generated photographing result in an album application of the electronic device. In this way, when the electronic device automatically triggers photographing in the video recording mode, because a photographing solution is reused, a real image with high quality is generated, so that an image with better quality at a wonderful moment can be obtained.

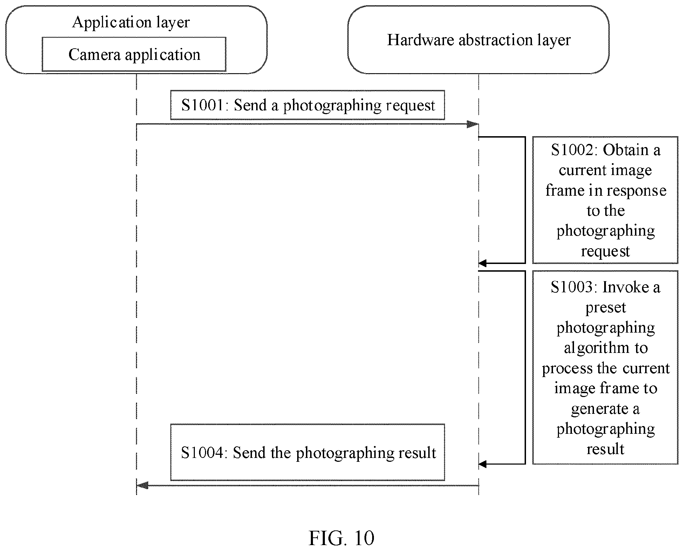

FIG. 10 is a schematic diagram of a working procedure of another automatic photographing method according to an embodiment of this application. In the another automatic photographing method provided in this embodiment of this application, after an automatic photographing function is enabled, an electronic device may further perform the following steps in addition to normally performing the foregoing step S501 to step S505 (which are not separately shown in FIG. 10).

Step S 1001: The camera application sends a photographing request to the hardware abstraction layer.

Specifically, the photographing request may be triggered by a user. For example, the camera application may generate the photographing request in response to an operation performed by the user on a photographing preview interface. The operation performed by the user on the photographing preview interface may include a tap operation performed by the user on a photographing button when the automatic photographing function is enabled.

Step S1002: The hardware abstraction layer obtains a current image frame in response to the photographing request.

The current image frame is an image frame collected by the hardware abstraction layer at a current moment from the image data obtained by the camera sensor.

In addition, after step S1002 is performed and before step S1003 is performed, the method provided in this embodiment of this application further includes:
The hardware abstraction layer sends a thumbnail of the current image frame to the camera application. In this way, before a real image is generated, a thumbnail may be first provided for a user to preview, so that the user can determine a subsequent operation based on a preview effect, a user requirement is better met, and user experience is better.

Step S1003: The hardware abstraction layer invokes the preset photographing algorithm to process the current image frame to generate the photographing result.

The preset photographing algorithm may be a preset processing algorithm, such as a default photographing algorithm, corresponding to a photographing mode that is in the electronic device and that matches the current image frame. The preset photographing algorithm may specifically include multi-frame fusion, dynamic adjustment, light adjustment, or the like.

Specifically, the hardware abstraction layer may obtain, based on the preset photographing algorithm, a rest image frame required by the preset photographing algorithm, and finally invoke the preset photographing algorithm to process the rest image frame and the current image frames to generate the photographing result. The current image frame is a raw image frame, the rest image frame is an image frame near the raw image frame, and a total quantity of raw image frames and rest image frames is a total quantity of image frames required by the preset photographing algorithm.

Step S1004: The hardware abstraction layer sends the photographing result to the camera application.

Specifically, the hardware abstraction layer may call back the photographing result to the camera application through a private interface, to provide the photographing result for a user to view. Finally, the photographing result is stored at a specified storage location in the electronic device, for example, in an album.

In the another photographing method provided in this embodiment of this application, the hardware abstraction layer may directly perform manual photographing in response to the photographing request delivered by the camera application. In this way, both manual direct photographing and automatically triggered photographing may be considered, so that a user can select different photographing manners based on an actual requirement, and a photographing manner can be more flexible.

In an implementation of the another automatic photographing method provided in this embodiment of this application, the hardware abstraction layer includes a collection engine, a frame selection module, a perception algorithm module, and a photographing management module.

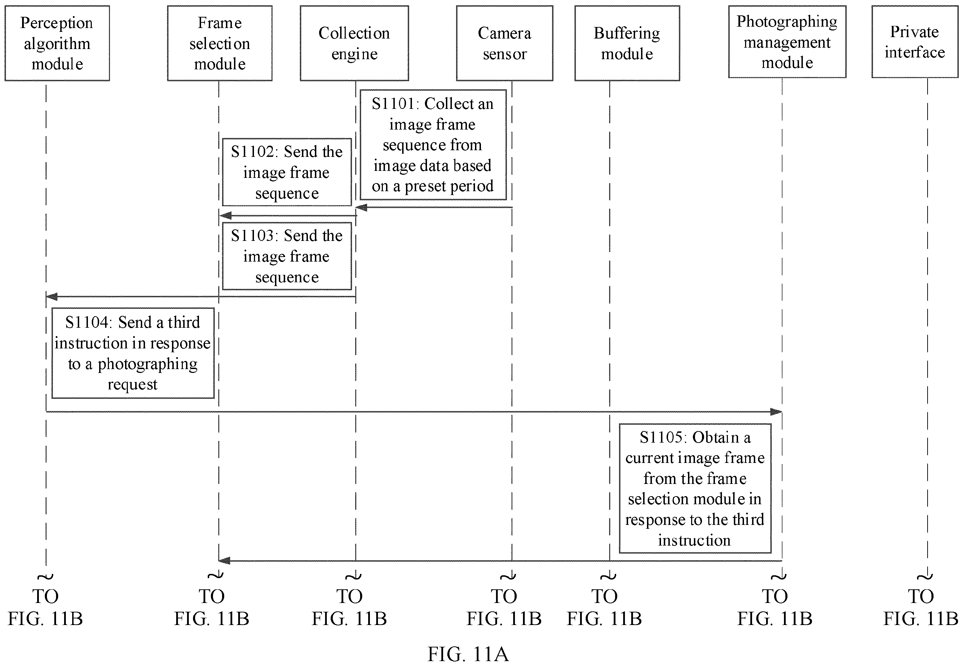

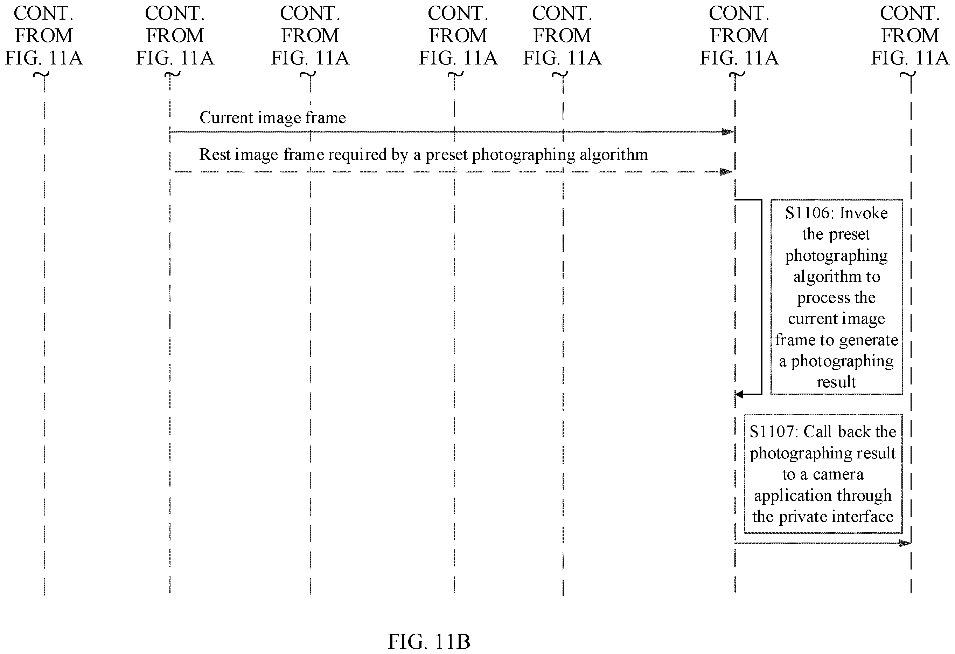

FIG. 11A and FIG. 11B are a schematic diagram of data interaction in an implementation of another automatic photographing method according to an embodiment of this application. As shown in FIG. 11A and FIG. 11B, a process of interaction between modules at a hardware abstraction layer and a camera sensor may include the following steps.

Step S1101: A collection engine collects, based on a preset period, an image frame sequence from image data obtained by the camera sensor.

The image frame sequence includes at least one image frame. In the image frame sequence, the at least one image frame is arranged in an order of timestamps from early to late. The camera sensor belongs to a component at a hardware layer of an electronic device, and is configured to collect image data. The image data obtained by the camera sensor may be a continuous signal.

Step S1102: The collection engine sends the image frame sequence to a frame selection module.

Specifically, each time collecting an image frame, the collection engine may send the image frame to the frame selection module.

Step S1103: The collection engine sends the image frame sequence to a perception algorithm module.

Step S 1103 and step S1102 may be performed simultaneously. To be specific, each time collecting an image frame, the collection engine may simultaneously send the image frame to the frame selection module and the perception algorithm module.

Step S1104: The perception algorithm module sends a third instruction to a photographing management module in response to a photographing request.

Specifically, the photographing request may be triggered by a user. The third instruction is used to instruct the photographing management module to obtain a current image frame from the frame selection module, and invoke a preset photographing algorithm to process the current image frame to generate a photographing result.

Step S 1105: The photographing management module obtains the current image frame from the frame selection module in response to the third instruction.

A first image frame is an image frame collected by the collection engine at a current moment from the image data obtained by the camera sensor.

Step S 1106: The photographing management module invokes the preset photographing algorithm to process the current image frame to generate the photographing result.

Specifically, after the photographing management module obtains the current image frame, the photographing management module obtains, from the frame selection module, a rest image frame required by the preset photographing algorithm, and invokes the preset photographing algorithm to process the rest image frame and the current image frame to generate the photographing result. The current image frame is a raw image frame, the rest image frame is an image frame near the raw image frame, and a total quantity of raw image frames and rest image frames is a total quantity of image frames required by the preset photographing algorithm.

Step S 1107: The photographing management module calls back the photographing result to a camera application through a private interface.

Specifically, there are a plurality of types of private interfaces, for example, an HAL3 interface. This is not specifically limited in this embodiment of this application.

In the foregoing implementation, an architecture of the hardware abstraction layer does not interfere with normal execution of a conventional manual photographing instruction while self-triggered photographing is performed, so that a user requirement can be better met.

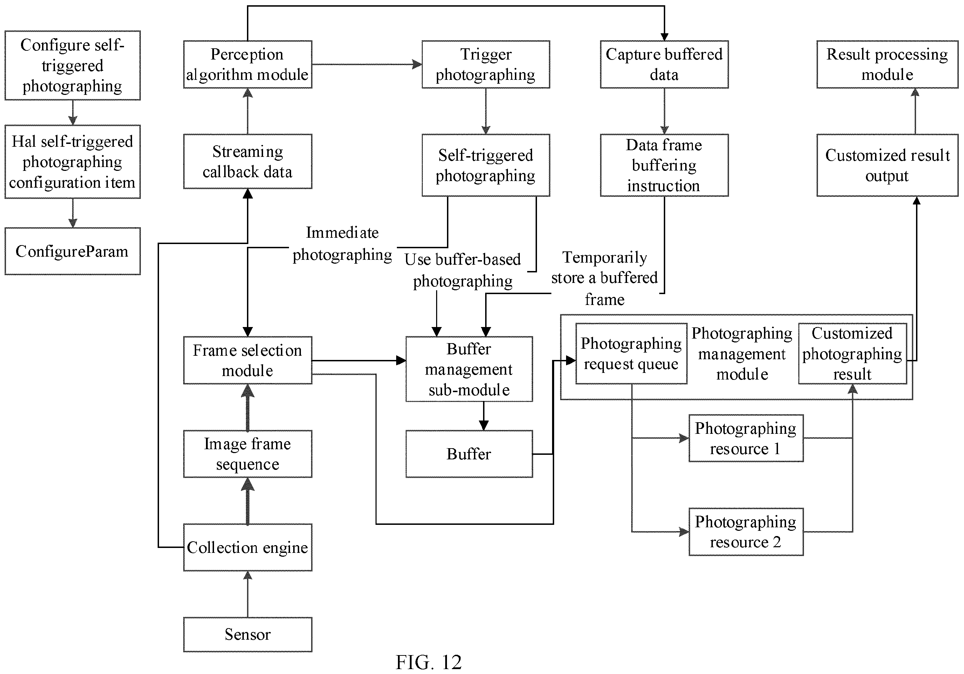

FIG. 12 is a schematic diagram of a specific photographing procedure performed by a self-triggered photographing architecture according to an embodiment of this application. As shown in FIG. 12, in the self-triggered photographing architecture provided in this embodiment of this application, before a self-triggered photographing function is used, self-triggered photographing may be first configured, and then a configuration parameter (ConfigureParam) is configured through an Hal self-triggered photographing configuration item interface. After the self-triggered photographing function is configured, a collection engine may obtain an image frame sequence from a camera sensor (Sensor), and send the image frame sequence to a frame selection module. In addition, the collection engine further sends the image frame sequence to a perception algorithm module through a Streaming callback data interface. After detecting that a semantic meaning and picture quality of an image frame meet a buffer condition, the perception algorithm module may generate an instruction for capturing buffered data, and then the instruction reaches a buffer management sub-module through a data frame buffering instruction interface. The buffer management sub-module obtains, from the frame selection module, a corresponding data frame that needs to be buffered, and temporarily stores the data frame in a buffer. The buffer management sub-module and the buffer jointly form a buffering module.

In addition, after detecting that the semantic meaning and the picture quality of the image frame meet a photographing triggering condition, the perception algorithm module may further generate a photographing triggering instruction, and in response to the photographing triggering instruction, immediate photographing may be performed or buffer-based photographing may be used. When immediate photographing is performed, the instruction reaches the frame selection module through a self-triggered photographing interface. The frame selection module sends to-be-photographed data to a photographing management module based on the instruction. Specifically, the frame selection module sends the to-be-photographed data to a photographing request queue in the photographing management module. When buffer-based photographing is used, the instruction reaches the buffer management sub-module through the self-triggered photographing interface. The buffer management sub-module sends to-be-photographed data in the buffer to the photographing request queue in the photographing management module based on the instruction.

The photographing request queue performs priority processing and concurrent logic processing on a plurality of automatic photographing and manual photographing instructions. A photographing resource concurrently processes a plurality of automatic photographing and manual photographing procedures by using the photographing management module. The photographing management module invokes, in an arrangement sequence of the photographing request queue, a corresponding photographing resource to process the to-be-photographed data to obtain a photographing result, and finally outputs the photographing result by using a customized photographing result (result) in the photographing management module. The customized photographing result may be used to customize and output one photographing result or a plurality of photographing results for packaging. The output photographing result is transmitted to a result processing module through a customized result output interface.

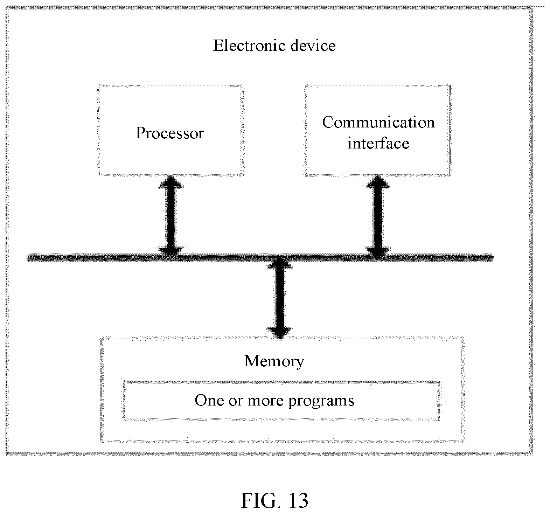

An embodiment of this application further provides an automatic photographing apparatus. FIG. 13 is a schematic diagram of a structure of an automatic photographing apparatus according to an embodiment of this application. The automatic photographing apparatus provided in this embodiment of this application includes an operating system, the operating system includes a hardware abstraction layer and an application layer, and the application layer includes a camera application. As shown in FIG. 13, the automatic photographing apparatus further includes a processor, a memory, and a communication interface. The memory stores one or more program instructions. When the program instructions are executed by the processor, an electronic device is enabled to perform the automatic photographing method provided in the foregoing embodiments of this application and the methods in the implementations of the embodiments. Specifically, the foregoing program instructions include an instruction used to perform the following steps:
after the camera application is started, controlling the hardware abstraction layer to collect, based on a preset period, an image frame sequence from image data obtained by a camera sensor, where the image frame sequence includes at least one image frame; and to detect whether a semantic meaning and picture quality of each image frame meet a preset buffer condition and a preset photographing triggering condition;
if the semantic meaning and the picture quality of the image frame meet the buffer condition, controlling the hardware abstraction layer to buffer the image frame;
if the semantic meaning and the picture quality of the image frame meet the photographing triggering condition, controlling the hardware abstraction layer to invoke a preset photographing algorithm to process to-be-photographed data to generate a photographing result, where the to-be-photographed data includes at least one of a currently buffered image frame, an image frame whose semantic meaning and picture quality meet the preset photographing triggering condition, or image data newly obtained by the camera sensor; and
controlling the hardware abstraction layer to send the photographing result to the camera application.

In an implementation, in terms of controlling the hardware abstraction layer to detect whether a semantic meaning and picture quality of each image frame meet a preset buffer condition and a preset photographing triggering condition, the foregoing program instructions include an instruction specifically used to perform the following steps:
controlling the hardware abstraction layer to perform semantic recognition on each image frame to obtain a semantic recognition result of the image frame;
controlling the hardware abstraction layer to generate a score of the image frame based on the semantic recognition result of the image frame and a picture quality level of the image frame;
controlling the hardware abstraction layer to determine whether the score of the image frame is in a first threshold range corresponding to the preset buffer condition;
if the score of the image frame is in the first threshold range, controlling the hardware abstraction layer to determine that the semantic meaning and the picture quality of the image frame meet the buffer condition;
controlling the hardware abstraction layer to determine whether the score of the image frame is in a second threshold range corresponding to the preset photographing triggering condition; and
if the score of the image frame is in the second threshold range, controlling the hardware abstraction layer to determine that the semantic meaning and the picture quality of the image frame meet the photographing triggering condition.

In an implementation, the foregoing program instructions further include an instruction used to perform the following steps:
before the camera application is started, controlling the hardware abstraction layer to send a capability value that supports an automatic photographing function to the camera application; and
after the camera application is started, controlling the hardware abstraction layer to configure the automatic photographing function based on the capability value.

In an implementation, the hardware abstraction layer includes a collection engine, a frame selection module, a perception algorithm module, a buffering module, and a photographing management module.

In terms of controlling the hardware abstraction layer to buffer the image frame, the foregoing program instructions include an instruction specifically used to perform the following steps:
controlling the collection engine to collect, based on the preset period, the image frame sequence from the image data obtained by the camera sensor; and to send the image frame sequence to the frame selection module and the perception algorithm module;
controlling the perception algorithm module to send, after detecting that the semantic meaning and the picture quality of the image frame meet the buffer condition, a first instruction to the photographing management module; and
controlling the photographing management module to control, in response to the first instruction, the frame selection module to send the image frame to the buffering module for buffering.

In an implementation, in terms of controlling the hardware abstraction layer to invoke a preset photographing algorithm to process to-be-photographed data to generate a photographing result, the foregoing program instructions include an instruction specifically used to perform the following steps:
controlling the perception algorithm module to send, after detecting that the semantic meaning and the picture quality of the image frame meet the photographing triggering condition, a second instruction to the photographing management module;
controlling the photographing management module to obtain the to-be-photographed data in response to the second instruction; and
controlling the photographing management module to invoke the preset photographing algorithm to process the to-be-photographed data to generate the photographing result.

In an implementation, in terms of controlling the photographing management module to obtain the to-be-photographed data in response to the second instruction, the program instructions include an instruction specifically used to perform the following step:
controlling the photographing management module to obtain a currently buffered image frame from the buffering module in response to the second instruction.

In an implementation, the foregoing program instructions further include an instruction used to perform the following steps:
controlling the camera application to send a photographing request to the hardware abstraction layer;
controlling the hardware abstraction layer to obtain a current image frame in response to the photographing request, where the current image frame is an image frame collected by the hardware abstraction layer at a current moment from the image data obtained by the camera sensor;
controlling the hardware abstraction layer to invoke the preset photographing algorithm to process the current image frame to generate the photographing result; and
controlling the hardware abstraction layer to send the photographing result to the camera application.

In an implementation, before the controlling the hardware abstraction layer to invoke the preset photographing algorithm to process the current image frame, the foregoing program instructions further include an instruction used to perform the following step:
controlling the hardware abstraction layer to send a thumbnail of the current image frame to the camera application.

In an implementation, the hardware abstraction layer includes a collection engine, a frame selection module, a perception algorithm module, and a photographing management module.

In terms of controlling the hardware abstraction layer to obtain a current image frame in response to the photographing request, the foregoing program instructions specifically include an instruction used to perform the following steps:
controlling the collection engine to collect, based on the preset period, the image frame sequence from the image data obtained by the camera sensor; and to send the image frame sequence to the frame selection module and the perception algorithm module;
controlling the perception algorithm module to send a third instruction to the photographing management module in response to the photographing request; and
controlling the photographing management module to obtain the current image frame from the frame selection module in response to the third instruction.

In an implementation, in terms of controlling the hardware abstraction layer to invoke the preset photographing algorithm to process the current image frame to generate the photographing result, the foregoing program instructions include an instruction specifically used to perform the following steps:
controlling the photographing management module to obtain, from the frame selection module, a rest image frame required by the preset photographing algorithm; and
controlling the photographing management module to invoke the preset photographing algorithm to process the rest image frame and the current image frame to generate the photographing result.

It should be noted that, for a specific implementation process of this embodiment of this application, refer to the specific implementation process described in the foregoing method embodiment. Details are not described herein again.

Solutions in embodiments of this application are mainly described in the foregoing embodiments from a perspective of a method-side execution process. It may be understood that to implement the foregoing functions, the electronic device includes corresponding hardware structures and/or software modules for performing the functions. A person skilled in the art should be easily aware that the example units and algorithm steps described with reference to the embodiments disclosed in this specification can be implemented in this application in a form of hardware or a combination of hardware and computer software. Whether a specific function is performed by hardware or hardware driven by computer software depends on a particular application and a design constraint condition of the technical solutions. A skilled person may use different methods to implement the described functions for each specific application, but it should not be considered that such an implementation goes beyond the scope of this application.

In the embodiments of this application, the electronic device may be divided into functional units based on the foregoing method examples. For example, each functional unit may be obtained through division for a corresponding function, or two or more functions may be integrated into one processing unit. The integrated unit may be implemented in a form of hardware, or may be implemented in a form of a software functional unit. It should be noted that, unit division in the embodiments of this application is merely an example, and is merely logical function division. There may be another division manner in actual implementation.

An embodiment of this application further provides a computer-readable storage medium. The computer-readable storage medium stores instructions. When the instructions are run on a computer, the computer is enabled to perform the automatic photographing method provided in the foregoing embodiments of this application and the methods in the implementations of the embodiments.

An embodiment of this application further provides a computer program product including instructions. When the computer program product is run on a computer, the computer is enabled to perform the automatic photographing method provided in the foregoing embodiments of this application and the methods in the implementations of the embodiments.

An embodiment of this application further provides a chip system. The chip system includes a processor, configured to support the foregoing apparatus in implementing functions in the foregoing aspects, for example, generating or processing information in the foregoing method. In a possible design, the chip system further includes a memory. The memory stores computer program instructions. When the computer program instructions are executed by the processor, the chip system is enabled to perform the automatic photographing method provided in the foregoing embodiments of this application and the methods in the implementations of the embodiments. The chip system may include a chip, or may include a chip and another discrete device.

The objectives, technical solutions, and beneficial effects of the embodiments of this application are further described in detail in the foregoing specific implementations. It should be understood that the foregoing descriptions are merely specific implementations of the embodiments of this application, but are not intended to limit the protection scope of the embodiments of this application. Any modification, equivalent replacement, improvement, or the like made based on the technical solutions of the embodiments of this application shall fall within the protection scope of the embodiments of this application.

## Claims

1. An automatic photographing method, applied to an electronic device, wherein the electronic device comprises an operating system, the operating system comprises a hardware abstraction layer and an application layer, and the application layer comprises a camera application; and the method comprises:
after the camera application is started, collecting, by the hardware abstraction layer based on a preset period, an image frame sequence from image data obtained by a camera sensor, wherein the image frame sequence comprises at least one image frame; and detecting whether a semantic meaning and picture quality of each image frame meet a preset buffer condition and a preset photographing triggering condition;
if the semantic meaning and the picture quality of the image frame meet the buffer condition, buffering, by the hardware abstraction layer, the image frame;
if the semantic meaning and the picture quality of the image frame meet the photographing triggering condition, invoking, by the hardware abstraction layer, a preset photographing algorithm to process to-be-photographed data to generate a photographing result, wherein the to-be-photographed data comprises at least one of a currently buffered image frame, an image frame whose semantic meaning and picture quality meet the preset photographing triggering condition, or image data newly obtained by the camera sensor; and
sending, by the hardware abstraction layer, the photographing result to the camera application.

2. The method according to claim 1, wherein the detecting, by the hardware abstraction layer, whether a semantic meaning and picture quality of each image frame meet a preset buffer condition and a preset photographing triggering condition comprises:
performing, by the hardware abstraction layer, semantic recognition on each image frame to obtain a semantic recognition result of the image frame;
generating, by the hardware abstraction layer, a score of the image frame based on the semantic recognition result of the image frame and a picture quality level of the image frame;
determining, by the hardware abstraction layer, whether the score of the image frame is in a first threshold range corresponding to the preset buffer condition;
if the score of the image frame is in the first threshold range, determining, by the hardware abstraction layer, that the semantic meaning and the picture quality of the image frame meet the buffer condition;
determining, by the hardware abstraction layer, whether the score of the image frame is in a second threshold range corresponding to the preset photographing triggering condition; and
if the score of the image frame is in the second threshold range, determining, by the hardware abstraction layer, that the semantic meaning and the picture quality of the image frame meet the photographing triggering condition.

3. The method according to claim 1, wherein the method further comprises:
before the camera application is started, sending, by the hardware abstraction layer, a capability value that supports an automatic photographing function to the camera application; and
after the camera application is started, configuring, by the hardware abstraction layer, the automatic photographing function based on the capability value.

4. The method according to claim 1, wherein the hardware abstraction layer comprises a collection engine, a frame selection module, a perception algorithm module, a buffering module, and a photographing management module; and
the buffering, by the hardware abstraction layer, the image frame comprises:
collecting, by the collection engine based on the preset period, the image frame sequence from the image data obtained by the camera sensor, and sending the image frame sequence to the frame selection module and the perception algorithm module;
sending, by the perception algorithm module, a first instruction to the photographing management module after detecting that the semantic meaning and the picture quality of the image frame meet the buffer condition; and
in response to the first instruction, controlling, by the photographing management module, the frame selection module to send the image frame to the buffering module for buffering.

5. The method according to claim 4, wherein the invoking, by the hardware abstraction layer, a preset photographing algorithm to process to-be-photographed data to generate a photographing result comprises:
sending, by the perception algorithm module, a second instruction to the photographing management module after detecting that the semantic meaning and the picture quality of the image frame meet the photographing triggering condition;
obtaining, by the photographing management module, the to-be-photographed data in response to the second instruction; and
invoking, by the photographing management module, the preset photographing algorithm to process the to-be-photographed data to generate the photographing result.

6. The method according to claim 5, wherein the obtaining, by the photographing management module, the to-be-photographed data in response to the second instruction comprises:
obtaining, by the photographing management module, a currently buffered image frame from the buffering module in response to the second instruction.

7. The method according to claim 1, wherein the method further comprises:
sending, by the camera application, a photographing request to the hardware abstraction layer;
obtaining, by the hardware abstraction layer, a current image frame in response to the photographing request, wherein the current image frame is an image frame collected by the hardware abstraction layer at a current moment from the image data obtained by the camera sensor;
invoking, by the hardware abstraction layer, the preset photographing algorithm to process the current image frame to generate the photographing result; and
sending, by the hardware abstraction layer, the photographing result to the camera application.

8. The method according to claim 7, wherein before the invoking, by the hardware abstraction layer, the preset photographing algorithm to process the current image frame, the method further comprises:
sending, by the hardware abstraction layer, a thumbnail of the current image frame to the camera application.

9. The method according to claim 7, wherein the hardware abstraction layer comprises a collection engine, a frame selection module, a perception algorithm module, and a photographing management module; and
the obtaining, by the hardware abstraction layer, a current image frame in response to the photographing request comprises:
collecting, by the collection engine based on the preset period, the image frame sequence from the image data obtained by the camera sensor, and sending the image frame sequence to the frame selection module and the perception algorithm module;
sending, by the perception algorithm module, a third instruction to the photographing management module in response to the photographing request; and
obtaining, by the photographing management module, the current image frame from the frame selection module in response to the third instruction.

10. The method according to claim 9, wherein the invoking, by the hardware abstraction layer, the preset photographing algorithm to process the current image frame to generate the photographing result comprises:
obtaining, by the photographing management module from the frame selection module, a rest image frame required by the preset photographing algorithm; and
invoking, by the photographing management module, the preset photographing algorithm to process the rest image frame and the current image frame to generate the photographing result.

11. An electronic device, comprising a processor, a memory, and a communication interface, wherein the memory stores one or more program instructions, and when the program instructions are executed by the processor, the electronic device is enabled to perform the method according to any one of claims 1-10.
